# EUROPEAN PATENT APPLICATION

(11) **EP 4 071 934 A1**
(43) Date of publication of application: **12.10.2022**
(21) Application number: 21305451.3
(22) Date of filing: 08.04.2021
(51) Int. Cl.: H01R 4/2433, H01R 9/24

(54) **TERMINAL BLOCK CONFIGURED TO RECEIVE NON-STRIPPED WIRE ENDS**

(71) Applicant: Tyco Electronics France SAS, 95300 Pontoise (FR)
(72) Inventor: VILLARD, Romain, 95300 Pontoise (FR); FRANCE, Philippe, 95300 Pontoise (FR); VILLARDIER, Yannick, 95300 Pontoise (FR)
(74) Representative: Germain Maureau

(57) **Abstract**

Terminal block (1) configured to receive non-stripped wire ends (11), the terminal block (1) including an insulating casing (3) and a conductive part (5) installed in the insulating casing (3), the conductive part (5) presenting a cooperating slot engendered by two cooperating blades of the conductive part (5) for an insulation-displacement contact connection of a non-stripped wire end (11), the cooperating blades extending according to a connection axis (13), wherein the terminal block (1) also comprises a displacement tool (15) configured to displace said non-stripped wire end (11) according the connection axis (13) from a disconnected position to a connected position wherein the two cooperating blades are in electrical contact with a central conducting core of the non-stripped wire end (11), the displacement tool (15) being linked to the insulating casing (3) by a tongue (19) of the terminal block (1).

## Description

### Field of the invention

The present invention concerns a terminal block configured to receive non-stripped wire ends.

### Prior art

It is known to directly connect a wire end to a terminal block without stripping said end beforehand. To this purpose, there is a need of an insulation-displacement contact connection that can cut an insulation of the wire end to access to a central conducting core of the wire end.

As there is a need to cut the insulation to have an electrical contact, the terminal block should be equipped with a tool or adapted to receive an external tool for pushing the wire end in a connected position.

Such a tool is configured to be moved by hand to engender a sufficient force for cutting the insulation. It is known to use rotating devices built in the terminal block. In this case, the wire end is inserted in the terminal block and the rotating device moved by hand for the connection.

There are other systems using external tools for pushing the inserted wire end from a disconnected position to the connected position.

These connection devices are satisfying in that they enable to realize an electrical connection. However, this is necessary to have an elaborated mechanical assembly in case of a rotating device and to use an external tool when pushing the wire end in the alternative solution.

Thus, there is a need for a connection assembly that is simplified and that necessitates a limited amount of pieces for ease of manufacturing. There is also a need for facilitating the use on field in the absence of a dedicated tool.

The present invention aims to solve all or some of the disadvantages mentioned above.

### Summary of the invention

For this purpose, the present invention relates to a terminal block configured to receive non-stripped wire ends, the terminal block including an insulating casing and a conductive part installed in the insulating casing, the conductive part presenting a cooperating slot engendered by two cooperating blades of the conductive part for an insulation-displacement contact connection of a non-stripped wire end, the cooperating blades extending according to a connection axis, wherein the terminal block also comprises a displacement tool configured to displace said non-stripped wire end according the connection axis from a disconnected position to a connected position wherein the two cooperating blades are in electrical contact with a central conducting core of the non-stripped wire end, the displacement tool being linked to the insulating casing by a tongue of the terminal block.

The terminal block is equipped with a simple and reliable system for pushing the non-stripped wire end from the disconnected position to the connected position.

The displacement tool is also part of the terminal block and not used as a separate part. This is an advantage as, during manufacturing, there is no need for an additional reference of a separated part. In addition, as the displacement tool is always linked to the insulating casing, there is no need to have a specific tool for the person realizing the wire end connection.

According to an aspect of the invention, the cooperating blades are sharpened and configured to cut an insulation of the non-stripped wire end to reach the central conducting core.

According to an aspect of the invention, the terminal block is configured to be secured on a rail.

According to an aspect of the invention, the tongue extends substantially parallel to the connection axis in the absence of forces acting thereon, said tongue being configured to be bent for half turning the displacement tool from an initial position to an actuating position for pushing the non-stripped wire end from the disconnected position to the connected position.

This construction enables to have a reliable link between the displacement tool and the insulting casing. Indeed, it limits the risk of breaking the tongue and therefore separating the displacement tool.

The tongue is configured to be bent and to be flexible enough to enable a half turn the displacement tool.

Accord to an aspect of the invention, the tongue is a flat strip. Said flat strip has a constant width and a constant thickness. Therefore, there is no weak region that might break: the tongue is flexible and can easily be bent.

According to an aspect of the invention, the insulating casing is provided with a nozzle for introducing the displacement tool within an actuating channel of the insulating casing to access and move the non-stripped wire end from the disconnected position to the connected position, said nozzle comprising a wall linked to the tongue and extending in alignment with the tongue in the absence of forces acting on the tongue.

The cooperation between the wall and the tongue enables to strengthen the link with the insulation casing. It reduces the risk to break the tongue at its linking location with the insulating casing.

In addition, the nozzle facilitates the placement of the displacement tool within the channel to push the non-stripped wire end.

The actuating channel is a guide for the displacement tool that enables a displacement according to the connection axis.

According to an aspect of the invention, an actuating recess is made on a top part of the displacement tool. The actuating recess is configured for receiving a screwdriver end for pushing the non-stripped wire end thanks to the displacement tool from the disconnected position to the connected position.

According to an aspect of the invention, the insulating casing is provided with an insertion opening for receiving the non-stripped wire end. The insertion opening is elongated in parallel to the connection axis to enable the displacement of the non-stripped wire end from the disconnected position to the connected position. Said wire end extends transversally to the connection axis when moved between the disconnected to the connected position.

According to an aspect of the invention, the tongue extends according to an extension plane in the absence of forces acting thereon, the nozzle and the displacement tool extending in opposed directions transversally to the extension plane.

In other words, the nozzle and the displacement tool are located on opposite sides of the extension plane. This construction facilitates the half turning of the displacement tool and the bending of the tongue.

According to an aspect of the invention, the displacement tool is provided with two push branches, the cooperating slot being between the two push branches when displacing the non-stripped wire end from the disconnected position to the connected position.

According to an aspect of the invention, the tongue is extending in alignment with an external side of the displacement tool.

This provision strengthen the connection between the tongue and the displacement tool.

According to an aspect of the invention, the insulating casing presents a lateral opening for receiving the conductive part, the lateral opening being configured for the insertion of the conductive part in a mounted position according to an insertion direction that is transverse to the connection axis.

This provision facilitates the fabrication of the terminal block.

According to an aspect of the invention, the conductive part comprises a main body presenting a U profile extending transversally to the connection axis and a side body presenting a U profile extending according to the connection axis, the cooperating blades being made in the side body, the main body and the side body being linked by a lamella of the conductive part.

This construction is simple to realize and confers a rigidity to the conductive part.

According to an aspect of the invention, a central portion of the main body is provided with connecting elements configured to cooperate with complementary conducting elements to be plugged on the terminal block. The plug type is a jumper bar connection. The connecting elements correspond to holes of the central portion.

According to an aspect of the invention, the main body, the side body and the lamella are integral.

The structure of the conductive part is simple; there is no need of several parts linked by screws or other processes.

According to an aspect of the invention, the insulating casing, the tongue and the displacement tool are integral.

The feature facilitated the manufacturing of the terminal block. During the fabrication of the terminal block, there is no need to build and mount a mechanism dedicated to the moving of the non-stripped wire end.

According to an aspect of the invention, the conductive part comprises two cooperating slots each engendered by two corresponding cooperating blades of the conductive part for two insulation-displacement contact connections of two non-stripped wire ends, the terminal block including two displacement tools, each corresponding to a cooperating slot.

According to an aspect of the invention, the two connection axis are parallel to each other. Preferably, the two cooperating slots are symmetrical with respect to a central plane of the terminal block.

The present invention also concerns a method for manufacturing a terminal block as described above, comprising a step of molding the insulating casing, the tongue(s) and displacement tool(s) and a step of inserting the conductive part in the insulating casing.

This provision facilitates the manufacturing, especially when the insulating casing, tongues and displacement tools are integral. This is a one-step molding and then there is only one reference for the obtained part.

According to an aspect of the invention, the conductive part is obtained from a flat metal sheet that is cut and folded.

The different aspects defined above that are not incompatible can be combined.

### Brief description of the figures

The invention will be better understood with the aid of the detailed description that is set out below with reference to the appended drawing in which:
- figure 1 is a perspective view of a terminal block configured to receive two non-stripped wire ends;
- figure 2 is a perspective view of a conductive part of the terminal block;
- figure 3 is a top view of two cooperating blades of the conductive part and a wire end in a connected position;
- figure 4 is a perspective view of the terminal block and a screwdriver pushing a displacement tool of the terminal block.

### Description with reference to the figures

In the following detailed description of the figures defined above, the same elements or the elements that are fulfilling identical functions may retain the same references so as to simplify the understanding of the invention.

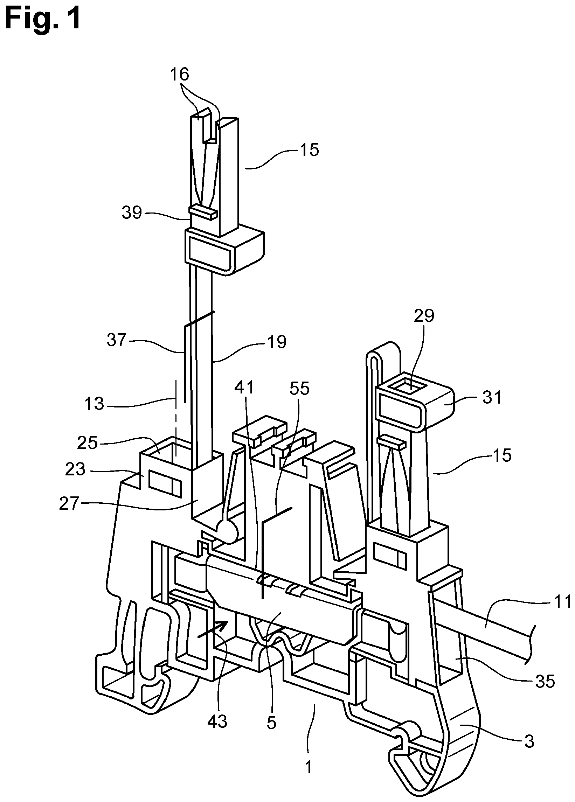

As illustrated in figures 1 to 4, a terminal block 1 is configured to receive non-stripped wire ends. The terminal block 1 is also configured to be secured on a rail.

The terminal block 1 includes an insulating casing 3 and a conductive part 5 installed in the insulating casing 3, the conductive part 3 presenting a cooperating slot 7 engendered by two cooperating blades 9 of the conductive part 5 for an insulation-displacement contact connection of a non-stripped wire end 11. The cooperating blades 9 extend according to a connection axis 13.

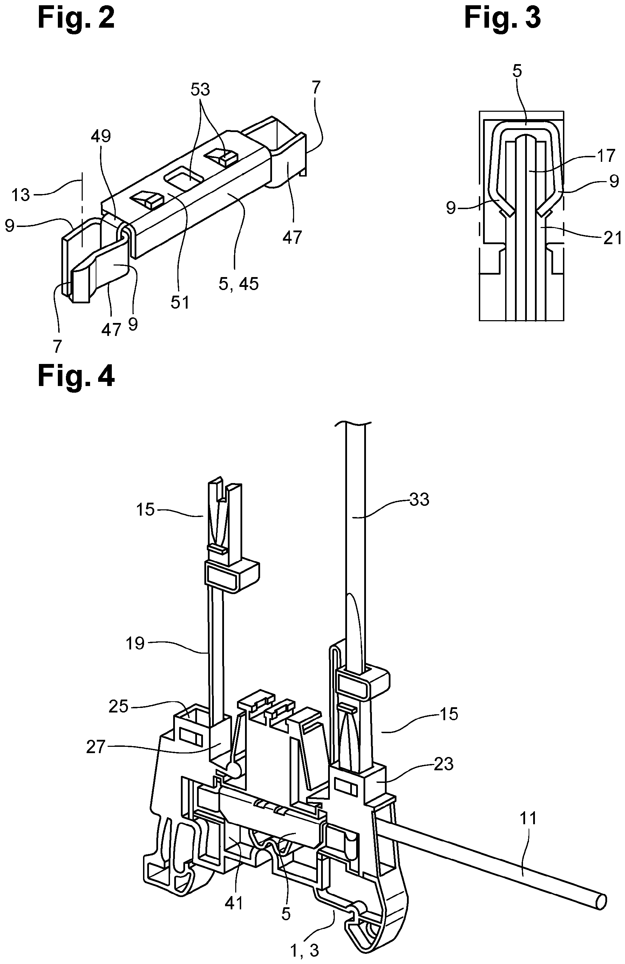

The terminal block 1 also comprises a displacement tool 15 configured to displace said non-stripped wire end 11 according the connection axis 13 from a disconnected position to a connected position. Figure 3 illustrates the connected position: the two cooperating blades 9 are in electrical contact with a central conducting core 17 of the non-stripped wire end 11.

The displacement tool 15 is linked to the insulating casing 3 by a tongue 19 of the terminal block 1.

The cooperating blades 9 are sharpened and configured to cut an insulation 21 of the non-stripped wire end 11 to reach the central conducting core 17.

The tongue 19 extends substantially parallel to the connection axis 13 in the absence of forces acting thereon, said tongue 19 being configured to be bent for half turning the displacement tool 15 from an initial position (left part of figures 1 and 4) to an actuating position (right part of figures 1 and 4) for pushing the non-stripped wire end 11 from the disconnected position to the connected position.

The tongue 19 is configured to be bent and to be flexible enough to enable a half turn the displacement tool 15. The tongue 19 is a flat strip. Said flat strip has a constant width and a constant thickness.

The insulating casing 3 is provided with a nozzle 23 for introducing the displacement tool 15 within an actuating channel 25 of the insulating casing 3 to access and move the non-stripped wire end 11 from the disconnected position to the connected position.

The nozzle 23 comprises a wall 27 linked to the tongue 19 and extending in alignment with the tongue 19 in the absence of forces acting on the tongue 19.

The actuating channel 25 is a guide for the displacement tool 15 that enables a displacement according to the connection axis 13.

An actuating recess 29 is made on a top part 31 of the displacement tool 15. The actuating recess 29 is configured for receiving a screwdriver end 33 for pushing the non-stripped wire end 11 thanks to the displacement tool 15 from the disconnected position to the connected position.

The insulating casing 3 is provided with an insertion opening 35 for receiving the non-stripped wire end 11. The insertion opening 35 is elongated in parallel to the connection axis 13 to enable the displacement of the non-stripped wire end 11 from the disconnected position to the connected position. Said wire end extends transversally to the connection axis 13 when moved between the disconnected to the connected position.

The tongue 19 extends according to an extension plane 37 in the absence of forces acting thereon, the nozzle 23 and the displacement tool 15 extending in opposed directions transversally to the extension plane 37.

In other words, the nozzle 23 and the displacement tool 15 are located on opposite sides of the extension plane 37.

The displacement tool 15 is provided with two push branches 16, the cooperating slot 7 being between the two push branches 16 when displacing the non-stripped wire end 11 from the disconnected position to the connected position. Thus, the non-stripped wire end 11 is pushed on both sides of the cooperating slot 7 transversally to the connection axis 13 so that it remains transversal.

The tongue 19 is extending in alignment with an external side 39 of the displacement tool 15.

The insulating casing 3 presents a lateral opening 41 for receiving the conductive part 5, the lateral opening 41 being configured for the insertion of the conductive part 5 in a mounted position according to an insertion direction 43 that is transverse to the connection axis 13.

As illustrated on figure 2, the conductive part 5 comprises a main body 45 presenting a U profile extending transversally to the connection axis 13 and a side body 47 presenting a U profile extending according to the connection axis 13, the cooperating blades 9 being made in the side body 47, the main body 45 and the side body 47 being linked by a lamella 49.

A central portion 51 of the main body 45 is provided with connecting elements 53 configured to cooperate with complementary conducting elements to be plugged on the terminal block 1. The plug type is a jumper bar connection. The connecting elements 53 correspond to holes of the central portion 51.

The main body 45, the side body 47 and the lamella 49 are integral and constitute the conductive part 5.

Similarly, the insulating casing 3, the tongue 19 and the displacement tool 15 are integral.

As illustrated on figures 1 to 4, the conductive part 5 comprises two cooperating slots 7 each engendered by two corresponding cooperating blades 9 of the conductive part 5 for two insulation-displacement contact connections of two non-stripped wire ends 11, the terminal block 1 including two displacement tools 15, each corresponding to a cooperating slot 7.

The two connection axis 13 are parallel to each other. In addition, the two cooperating slots 7 are symmetrical with respect to a central plane 55 of the terminal block 1.

A method for manufacturing a terminal block 1 comprises a step of molding the insulating casing 3, the tongues 19 and displacement tools 15 and a step of inserting the conductive part in the insulating casing 3.

The conductive part 5 is obtained from a flat metal sheet that is cut and folded.

Overall, it appears that the terminal block 1 is equipped with a simple and reliable system for pushing the non-stripped wire end 11 from the disconnected position to the connected position.

The displacement tool 15 is also part of the terminal block 1 and not used as a separate part. This is an advantage as, during manufacturing, there is no need for an additional reference of a separated part. In addition, as the displacement tool is always linked to the insulating casing 3, there is no need to have a specific tool for the person realizing the wire end connection.

As goes without saying, the invention is not limited to the sole embodiment described above by way of example, it encompasses all the variants.

## Claims

1. Terminal block (1) configured to receive non-stripped wire ends (11), the terminal block (1) including an insulating casing (3) and a conductive part (5) installed in the insulating casing (3), the conductive part (5) presenting a cooperating slot (7) engendered by two cooperating blades (9) of the conductive part (5) for an insulation-displacement contact connection of a non-stripped wire end (11), the cooperating blades (9) extending according to a connection axis (13), wherein the terminal block (1) also comprises a displacement tool (15) configured to displace said non-stripped wire end (11) according the connection axis (13) from a disconnected position to a connected position wherein the two cooperating blades (9) are in electrical contact with a central conducting core (17) of the non-stripped wire end (11), the displacement tool (15) being linked to the insulating casing (3) by a tongue (19) of the terminal block (1).

2. Terminal block (1) according to claim 1, wherein the tongue (19) extends substantially parallel to the connection axis (13) in the absence of forces acting thereon, said tongue (19) being configured to be bent for half turning the displacement tool (15) from an initial position to an actuating position for pushing the non-stripped wire end (11) from the disconnected position to the connected position.

3. Terminal block (1) according to claim 2, wherein the insulating casing (3) is provided with a nozzle (23) for introducing the displacement tool (15) within an actuating channel (25) of the insulating casing (3) to access and move the non-stripped wire end (11) from the disconnected position to the connected position, said nozzle (23) comprising a wall (27) linked to the tongue (19) and extending in alignment with the tongue (19) in the absence of forces acting on the tongue (19).

4. Terminal block (1) according to claim 3, wherein the tongue (19) extends according to an extension plane (37) in the absence of forces acting thereon, the nozzle (23) and the displacement tool (15) extending in opposed directions transversally to the extension plane (37).

5. Terminal block (1) according to one of the claims 1 to 4, wherein the tongue (19) is extending in alignment with an external side (39) of the displacement tool (15).

6. Terminal block (1) according to one of the claims 1 to 5, wherein the insulating casing (3) presents a lateral opening (41) for receiving the conductive part (5), the lateral opening (41) being configured for the insertion of the conductive part (5) in a mounted position according to an insertion direction (43) that is transverse to the connection axis (13).

7. Terminal block (1) according to one of the claims 1 to 6, wherein the conductive part (5) comprises a main body (45) presenting a U profile extending transversally to the connection axis (13) and a side body (47) presenting a U profile extending according to the connection axis (13), the cooperating blades (9) being made in the side body (47), the main body (45) and the side body (47) being linked by a lamella (49) of the conductive part (5).

8. Terminal block (1) according to claim 7, wherein the main body (45), the side body (47) and the lamella (49) are integral.

9. Terminal block (1) according to one of the claims 1 to 8, wherein the insulating casing (3), the tongue (19) and the displacement tool (15) are integral.

10. Terminal block (1) according to one of the claims 1 to 9, wherein the conductive part (5) comprises two cooperating slots (7) each engendered by two corresponding cooperating blades (9) of the conductive part (5) for two insulation-displacement contact connections of two non-stripped wire ends (11), the terminal block (1) including two displacement tools (15), each corresponding to a cooperating slot (7).

11. Method for manufacturing a terminal block (1) according to one of the claims 1 to 10, comprising a step of molding the insulating casing (3), the tongue(s) (19) and displacement tool(s) (15) and a step of inserting the conductive part (5) in the insulating casing (3).

12. Method for manufacturing according to claim 11, wherein the conductive part (3) is obtained from a flat metal sheet that is cut and folded.
